# EUROPÄISCHE PATENTANMELDUNG

(11) **EP 2 407 865 A1**
(43) Veröffentlichungstag der Anmeldung: **18.01.2012**
(21) Anmeldenummer: 10169785.2
(22) Anmeldetag: 16.07.2010
(51) Int. Cl.: G06F 3/041

(54) **Adaptive Kalibrierung von Sensorbildschirmen zur Optimierung der Interfacequalität**

(71) Anmelder: Gigaset Communications GmbH, 81379 München (DE)
(72) Erfinder: Mösker, Volker, 46419 Isselburg (DE)
(74) Vertreter: Hüttermann, Aloys

(57) **Zusammenfassung**

Die Erfindung betrifft ein Verfahren, mit dem der Sensorbildschirm einer Vorrichtung auf die Eigenheiten eines Nutzers eingestellt wird, um die Dateneingabe und Bedienbarkeit zu verbessern, sowie Vorrichtungen mit einem Sensorbildschirm, der mit dem Verfahren re- oder dekalibriert wird.

## Beschreibung

Die Erfindung betrifft die Verbesserung der Bedienbarkeit von Vorrichtungen, die einen Sensorbildschirm zur Eingabe von Daten aufweisen. Die vorliegende Erfindung betrifft insbesondere ein Verfahren, mit dem der Sensorbildschirm auf die Eigenheiten eines Nutzers eingestellt wird, sowie Vorrichtungen mit einem Sensorbildschirm, der mit dem Verfahren re- oder dekalibriert wird.

Ein Sensorbildschirm, auch "Touchscreen", "Touchinterface" oder "Tastschirm" genannt, ist ein Eingabegerät, bei dem durch Berührung von Teilen eines Bildes der Programmablauf eines technischen Gerätes, meist eines Computers, direkt gesteuert werden kann.

Die Bedienung von Computern und Mobiltelefonen erfolgt zunehmend über Sensorbildschirme. Dabei wird eine herkömmliche Tastatur und/oder Maus als Eingabevorrichtung durch eine entsprechende Darstellung/Funktionalität auf dem Sensorbildschirm dargestellt. Der Sensorbildschirm kann dann, beispielsweise bei der Eingabe von Texten, wie eine Tastatur verwendet werden, denn durch die Berührung des Bildschirms an einer Bedienfläche, also dem Bereich auf dem Sensorbildschirm in dem eine bestimmte Taste dargestellt wird, erfolgt die Eingabe des Zeichens, das auf der Bedienfläche dargestellt ist. Hierbei reicht es aus, wenn der Bildschirm an der entsprechenden Stelle berührt wird. Ein Drücken wie bei Tasten ist nicht erforderlich. Allerdings kann es, beispielsweise bedingt durch den Blickwinkel bei der Betrachtung des Sensorbildschirms, durch die Haltung und/oder durch die Motorik des Nutzers dazu kommen, dass die auf dem Sensorbildschirm vorhandenen berührungsempfindlichen Bedienflächen nicht präzise, sondern mit einer gewissen Abweichung getroffen werden. Durch diese zeitliche Verzögerung und/oder räumliche Abweichung kann es zu unbeabsichtigten Fehleingaben kommen, die zunächst rückgängig gemacht werden müssen, bevor das gewünschte Zeichen eingegeben werden kann. Durch die mit den unbeabsichtigten Fehleingaben verbundenen Unannehmlichkeiten wird die Bedienerfreundlichkeit von Vorrichtungen mit einem Sensorbildschirm beeinträchtigt.

Grundsätzlich gibt es verschiedene Möglichkeiten, das vorgenannte Problem zu lösen. So kann durch eine Vergrößerung der Bedienflächen die Toleranz für die Treffergenauigkeit erhöht werden. Der Nachteil bei dieser Möglichkeit ist der Mehrverbrauch an Anzeigenfläche auf dem Sensorbildschirm für die Interaktionsbereiche. Eine andere Möglichkeit besteht in der Verwendung eines Eingabestiftes, der wesentlich genauer auf dem Bedienfeld positioniert werden kann als ein Finger und auch weniger Bildfläche abschirmt. Allerdings ist die Bedienung mit einem Eingabestift umständlicher als die Bedienung mit dem Finger.

Der vorliegenden Erfindung lag daher die Aufgabe zugrunde, Möglichkeiten zur Verbesserung der Bedienbarkeit von Vorrichtungen mit einem Sensorbildschirm bereit zu stellen.

Die Lösung dieser Aufgabe erfolgt erfindungsgemäß durch die Kalibrierung des Sensorbildschirms auf die Eigenheiten des Nutzers.

Die Kalibrierung eines Sensorbildschirms zur Anpassung an die Eigenheiten des Nutzers kann zwar manuell zu einem definierten Zeitpunkt erfolgen, allerdings kann die variable Konstitution des Nutzers dabei nicht berücksichtigt werden. Bei resistiven Sensorbildschirmen ist eine manuelle Kalibrierung aus technischen Gründen notwendig. Bei kapazitiven Sensorbildschirmen ist eine manuelle Kalibrierung derzeit weder notwendig noch üblich. Erfindungsgemäß erfolgt die Kalibrierung des Sensorbildschirms zur ständigen Optimierung anhand der Eingaben durch den Nutzer. Dabei wird die Interaktion des Nutzers mit der Eingabeschnittstelle hinsichtlich Abweichung, Treffergenauigkeit, Treffertendenz und Fehleingaben ausgewertet und eine aktuelle Drifttendenz des Nutzers bestimmt. Auf Grundlage der Drifttendenz wird der Sensorbildschirm softwaregesteuert automatisch rekalibriert oder dekalibriert.

Durch diese automatische Re- oder Dekalibrierung des Sensorbildschirms auf Basis der jeweils aktuellen Drifttendenz kann der Sensorbildschirm an die Eigenheiten eines Nutzers angepasst werden, so dass die Häufigkeit von unerwünschten Fehleingaben reduziert werden kann.

Gegenstand der vorliegenden Erfindung ist somit ein Verfahren zur Verbesserung der Bedienbarkeit einer Sensorbildschirms durch Anpassung des Sensorbildschirms an die Eigenheiten eines Nutzers, indem die Interaktion des Nutzers mit dem Sensorbildschirm ausgewertet und der Sensorbildschirm automatisch rekalibriert oder dekalibriert wird.

Gemäß bevorzugten Ausführungsformen des Verfahrens wird die Interaktion des Nutzers mit dem Sensorbildschirm hinsichtlich der Abweichung, Treffergenauigkeit, Treffertendenz und/oder der Fehleingaben ausgewertet. Bei der Abweichung handelt es sich um eine zeitliche und/oder räumliche Abweichung des Treffers, also der Berührung des Sensorbildschirms. Bei der zeitlichen Abweichung wird beispielsweise analysiert, wie lang die Zeitintervalle zwischen zwei aufeinander folgenden Eingaben sind. Bei eine wechselnden Darstellung auf dem Sensorbildschirm kann auch die Latenzzeit zwischen geänderter Darstellung und erster Berührung des Sensorbildschirms bei der Analyse berücksichtigt werden. Bei der räumlichen Abweichung wird analysiert, ob die Treffer bei der Eingabe in eine bestimmte Richtung tendieren, zum Beispiel ob die Bedienflächen bei der Eingabe immer mittig oder z. B. nach rechts oder nach links oben versetzt getroffen werden. Bei der Treffergenauigkeit wird untersucht, wie oft die vorgesehene Bedienfläche verfehlt wird und wie groß die Distanz zwischen vorgesehener Bedienfläche und gesetztem Treffer ist. Bei der Treffertendenz wird berücksichtigt, ob die Abweichungen und/oder die Treffergenauigkeit zu oder abnimmt. Bei der Auswertung der Fehleingaben können bestimmte, wiederkehrende Muster berücksichtigt werden, beispielsweise wenn bestimmte Fehleingaben gehäuft vorkommen.

Vorzugsweise wird bei dem erfindungsgemäßen Verfahren softwaregesteuert eine Drifttendenz auf Grundlage der vorgenannten Auswertung ermittelt. Diese Drifttendenz gibt an, auf welche Weise sich die Eingaben über den Sensorbildschirm hinsichtlich Abweichung, Treffergenauigkeit, Treffertendenz und/oder der Fehleingaben verändern. Dieser Tendenz entsprechend wird der Sensorbildschirm re- oder dekalibriert, so dass die folgenden Eingaben des Nutzers eine geringere Abweichung, höhere Treffertendenz aufweisen und/oder weniger Fehleingaben getätigt werden.

Die Re- oder Dekalibrierung des Sensorbildschirms kann eine Erweiterung oder Vergrößerung ausgewählter Bedienfelder auf dem Sensorbildschirm, eine Verschiebung der berührungsempfindlichen Bereiche in Bezug auf die dargestellten Bedienfelder, eine Deaktivierung bestimmter Bereiche des Sensorbildschirms, so dass bei deren Berührung keine Eingabe erfolgt, und/oder eine Änderung der Ansprechdauer umfassen.

Die vorliegende Erfindung erstreckt sich auch auf Vorrichtungen, die einen Sensorbildschirm aufweisen, der mittels des vorgenannten Verfahrens re- oder dekalibriert wird. Vorzugsweise handelt es sich bei den erfindungsgemäßen Vorrichtungen um Computer, insbesondere Notebooks, Mobiltelefone oder Spielekonsolen.

## Patentansprüche

1. Verfahren zur Verbesserung der Bedienbarkeit einer Vorrichtung, die einen Sensorbildschirm umfasst, durch Anpassung des Sensorbildschirms an die Eigenheiten eines Nutzers, **dadurch gekennzeichnet, dass** die Interaktion des Nutzers mit dem Sensorbildschirm ausgewertet und der Sensorbildschirm automatisch rekalibriert oder dekalibriert wird.

2. Verfahren gemäß Anspruch 1, **dadurch gekennzeichnet, dass** die Interaktion des Nutzers mit dem Sensorbildschirm hinsichtlich Abweichung, Treffergenauigkeit, Treffertendenz und/oder Fehleingaben ausgewertet wird.

3. Verfahren nach Anspruch 1 oder 2, **dadurch gekennzeichnet, dass** auf Grundlage der Auswertung eine Drifttendenz ermittelt wird.

4. Verfahren nach einem der vorhergehenden Ansprüche, **dadurch gekennzeichnet, dass** die Rekalibrierung oder Dekalibrierung des Sensorbildschirms entsprechend der Drifttendenz erfolgt.

5. Verfahren nach einem der vorhergehenden Ansprüche, **dadurch gekennzeichnet, dass** durch die De- oder Rekalibrierung des Sensorbildschirms eine Erweiterung oder Vergrößerung ausgewählter Bedienfelder auf dem Sensorbildschirm, eine Verschiebung der berührungsempfindlichen Bereiche in Bezug auf die dargestellten Bedienfelder, eine Deaktivierung bestimmter Bereiche des Sensorbildschirms, so dass bei deren Berührung keine Eingabe erfolgt, und/oder eine Änderung der Ansprechdauer erfolgt.

6. Vorrichtung, umfassend einen Sensorbildschirm, **dadurch gekennzeichnet, dass** der Sensorbildschirm mit einem Verfahren gemäß einem der vorhergehenden Ansprüche re- oder dekalibriert und somit an die Eigenheiten des Nutzers angepasst wird.

7. Vorrichtung gemäß Anspruch 6, dadurch ausgezeichnet, dass sie aus der Gruppe ausgewählt ist, die Computer, Notebooks, Mobiltelefone und Spielekonsolen umfasst.
